# EUROPEAN PATENT APPLICATION

(11) **EP 4 516 759 A1**
(43) Date of publication of application: **05.03.2025**
(21) Application number: 23194885.2
(22) Date of filing: 01.09.2023
(51) Int. Cl.: C04B 28/04, C04B 22/00, C04B 24/12

(54) **LOW CARBON FOOTPRINT CONSTRUCTION MATERIAL WITH IMPROVED EARLY AND LATE STRENGTHS**

(71) Applicant: Construction Research & Technology GmbH, 83308 Trostberg (DE)
(72) Inventor: DHERS, Sebastien, 83308 Trostberg (DE); DALLA-LIBERA, Alessandro, 30121 Venice (VE) (IT); SCHWESIG, Peter, 83308 Trostberg (DE); MAZANEC, Oliver, 83308 Trostberg (DE); WELDERT, Kai, 83308 Trostberg (DE); BORRALLERAS MAS, Pere, 08940 Cornella de Llobregal (ES)
(74) Representative: Meissner Bolte Partnerschaft mbB

(57) **Abstract**

A construction material composition comprises a binder component comprising a) a Portland cement clinker containing at least 1.5 wt.-% of C₄AF; and b) a supplementary cementitious material, the supplementary cementitious material consisting of or comprising calcined clay. The construction material composition further comprises a strength enhancing additive comprising (i) a C-S-H seed component, and (ii) an alkanolamine. The strength enhancing additive exerts a significantly higher early strength enhancing effect on the construction material composition at practically all content levels of calcined clay than would be expected from the individual action on the Portland cement clinker.

## Description

The present invention relates to a low carbon footprint construction material composition with high early and late strengths and a method for enhancing the compressive strength of a binder component.

Most hydraulic cements employed today are based upon Portland cement. Portland cement is made primarily from certain clay minerals, limestone and gypsum, in a high temperature process that drives off carbon dioxide and chemically combines the primary ingredients into new compounds. Because carbon dioxide is generated by both the cement production process itself, as well as by energy plants that generate power to run the production process, cement production is currently a leading source of current carbon dioxide atmospheric emissions. As global warming and ocean acidification become an increasing problem and the desire to reduce carbon dioxide gas emissions (a principal cause of global warming) continues, the cement production industry will fall under increased scrutiny.

An effective way of increasing cement capacity whilst simultaneously reducing CO₂ emissions is to replace part of the clinker by supplementary cementitious materials such as fly ash or ground granulated blast furnace slag. However, the use of supplementary cementitious materials is limited by the availability of suitable materials and technical constraints which in turn limits the content of clinker which may be substituted.

A prerequisite for supplementary cementitious materials is that they contribute to strength development. One approach to address the limited availability of supplementary cementitious materials is to produce an artificial class of pozzolans by calcining clay.

The use of calcined clay materials as a partial substitute of Portland cement allows for cuts in CO₂ emissions at the same concrete strength achieved by conventional Portland cements. The general draw back of the use of high amount of supplementary cementitious materials and, in particular, calcined clays in the cement is the relatively low early strength. Calcined clays, unlike ordinary Portland cement, do not contribute significantly to the early strength development within the first few hours after mixing. Metakaolin and other aluminosilicates occurring in calcined clay have only limited solubility in an alkaline aqueous environment and, in addition, dissolve only very slowly. A much slower kinetic turnover is to be expected that needs days, or even weeks, to reach its maximum. Thus, calcined clays will contribute to the overall physical performance and/or durability of a construction material composition only after prolonged periods of time.

The problem of low early strength of construction material compositions with limited content of ordinary Portland cement is addressed in WO 2021/185718 A. The reference relates to construction material compositions comprising at most 55 % by dry weight of Portland cement the other main components being supplementary cementitious materials, limestone, sulfate source construction material. The compositions contain a hardening accelerator comprising particles with calcium and silicon in a molar ratio Ca/Si of 0.1 to 2.2, preferably calcium-silicate-hydrate (also referred to as C-S-H).

Similarly, EP 4 119 519 A discloses a concrete admixture based on transition metal silicate hydrates for improving the strength development at both early and longer ages of low-carbon cementitious compositions based on Portland cement and supplementary cementitious materials, including fly ash, slag, natural pozzolans, silica fume and calcined clays.

WO 2018/1 22091 A discloses a strength enhancing admixture for cementitious and/or pozzolanic compositions including calcium silicate hydrate and i) at least one alkanolamine; ii) at least one inorganic accelerator and iii) at least one carbohydrate.

WO 2018/154012 A relates to a hardening accelerator composition for construction chemical mixtures, comprising a mineral component and a polymeric water-soluble dispersing agent. The mineral component contains a semi-ordered calcium silicate hydrate having an apparent crystallite size of 15 nm or less.

However, the early strength enhancement that is achievable in construction material compositions containing calcined clay materials as a partial substitute of Portland cement by addition of C-S-H particles varies greatly and generally deserves improvement.

The present invention relates to a construction material composition comprising a binder component comprising
a) a Portland cement clinker containing at least 1.5 wt.-% of C4AF; and
b) one or more supplementary cementitious materials, the supplementary cementitious material(s) consisting of or comprising calcined clay;
the construction material composition further comprising a strength enhancing additive comprising
(i) a C-S-H seed component, and
(ii) an alkanolamine.

The present invention further relates to a method for enhancing the compressive strength of a binder component comprising
a) a Portland cement clinker containing at least 1.5 wt.-% of C4AF; and
b) one or more supplementary cementitious materials, the supplementary cementitious material(s) consisting of or comprising calcined clay;
comprising adding to the binder component a strength enhancing additive comprising
(i) a C-S-H seed component, and
(ii) an alkanolamine.

It has been found that the hardening acceleration of the C-S-H seed component on construction material compositions containing calcined clay materials in addition to Portland cement clinker can be generally improved by the combined use of the C-S-H seed component with an alkanolamine. However, some compositions are less susceptible to the early strength improvement by the combined action of C-S-H seed components and alkanolamines than others. It has been found that the composition of the mineral phases constituting the Portland cement clinker has a strong impact on the effectiveness and is linked to the content of C4AF in the clinker.

Surprisingly, the inventive strength enhancing additive exerts a significantly higher early strength enhancing effect on the construction material composition at practically all content levels of calcined clay than would be expected from the individual action on the Portland cement clinker.

### PORTLAND CEMENT CLINKER

Portland cement clinker is typically formed by burning an argillaceous type material such as clay, and a calcareous type material such as limestone, in a kiln at a temperature of about 1450°C for a period of time. In the binder component of the invention, Portland cement clinker is usually incorporated as a commercially available Portland cement. Portland cement is a hydraulic cement produced by pulverizing clinker consisting essentially of hydraulic calcium silicates, usually containing one or more forms of calcium sulfate as an interground addition. The term "Portland cement" denotes any cement compound containing Portland clinker, especially CEM I within the meaning of standard EN 197-1, paragraph 5.2. A preferred cement is ordinary Portland cement (OPC) according to DIN EN 197-1. Commercially available OPC may either contain calcium sulfate (< 7 wt.-%) or is essentially free of calcium sulfate (< 1 wt.-%).

The phases constituting Portland cement clinker mainly are calcium silicate mineral phases including alite (C3S) and belite (C2S), and calcium aluminate mineral phases, in particular calcium aluminate (C3A). Portland cement clinker may contain varying amounts of calcium ferroaluminate (C4AF) and other minor phases. The content of C4AF depends, inter alia, on whether or not miscellaneous iron oxides are incorporated into the mix that is sintered to obtain the clinker and the thermal history of the clinker.

Conveniently, the mineralogical phases are herein indicated by their cement notation. The primary compounds are represented in the cement notation by the oxide varieties: C for CaO, M for MgO, S for SiO₂, A for Al₂O₃, $ for SO₃, F for Fe₂O₃, and H for H₂O.

The calcium silicate mineral phases preferably constitute at least 60 wt.-% of the Portland cement clinker, more preferably at least 65 wt.-%, most preferably 65 to 75 wt.-%. The calcium silicate mineral phases provide primarily final strength properties.

It has been found that the susceptibility to the early strength improvement by the combined action of C-S-H seed components and alkanolamines is directly linked to the content of C₄AF in the clinker.

Suitable Portland cements for use in this invention are those that contain at least 1.5 wt.-% C4AF, preferably more than 2.5 wt.- % C4AF and most preferably more than 5 wt.-% C4AF. Preferably, the content of C4AF in the Portland cement is below 25 wt.-%. Preferably, the content of C4AF in the Portland cement is from 2.5 to 25 wt.-%, more preferably from 5 to 20 wt.-%. Clinkers with low C4AF contents, either due to low total iron or to a preponderance of Fe(ll) at the temperature of solidification of the clinker melt phase or for any other reason, are less susceptible to the strength enhancing effects.

Commonly, approximate proportions of the main minerals in Portland cement are calculated by the Bogue formula, which in turn is based on the elemental composition of the clinker determined, e.g., by means of X-ray fluorescence (XRF). Such methods provide the oxide composition of the elements. This means that the amount of Fe is reported as Fe₂O₃.

Because the Bogue calculation assumes the iron is present only in the C4AF phase, the calculated values for C4AF concentration will be in error when a significant fraction of the iron in a cement is present in phases other than C4AF.

Therefore, the amount of C4AF in a given clinker may be determined by methods capable of discriminating between the mineral phases constituting the cementitious binder. A useful method for this purpose is Rietveld refinement of an X-ray diffraction (XRD) powder pattern. This software technique is used to refine a variety of parameters, including lattice parameters, peak position, intensities and shape. This allows theoretical diffraction patterns to be calculated. As soon as the calculated diffraction pattern is almost identical to the data of an examined sample, precise quantitative information on the contained mineral phases can be determined.

### CALCINED CLAY

The binder component comprises one or more supplementary cementitious materials, wherein the supplementary cementitious material(s) consist of or comprise calcined clay.

Calcined clay materials are obtained by heat treatment of clays, which contain phyllosilicates, i.e. sheet silicates. Phyllosilicates include 1:1 and/or 2:1 layered (natural) clays or mixtures thereof, comprising di- and/or trioctahedral sheets or mixtures thereof and a layer charge of 0, e.g., kaolinite, up to a negative layer charge of 1, e.g. mica or mixtures thereof. Heat treatment of the clay converts the clay minerals by dehydroxylation with release of water. For example, kaolinite may be heat treated to obtain metakaolin (Al₂Si₂O₇). The obtained calcined clay material is a naturally derived pozzolan. Clays derived from natural deposits to prepare calcined clays can vary in composition and crystalline structure in a broad range. For the purpose of the present invention, a calcined clay is any material prepared by heat treatment of clay that provides a pozzolanic reactivity. As the composition, crystalline structure, fineness and the processing conditions like temperature and time of heat applied can vary significantly, the reactivity of calcined clays consequently can differ significantly as well.

The reactivity of the calcined clay varies according to clay type. Suitable clay materials have been found to belong to the kaolin group such as kaolinite, dickite, nacrite or halloysite. Acceptable strengths can also be obtained using clays of the smectite group including dioctahedral smectites such as montmorillonite and nontronite and trioctahedral smectites such as saponite, or vermiculite, and mixtures thereof. This opens the possibility of using clays which are much more widely available than kaolin. Illite exhibits limited reactivity.

Preferably, the calcined clay is derived from a raw clay having a kaolinite content of 20 to 80 wt.-%, preferably 30 to 70 wt.-%.

Preferably, the calcined clay has a BET surface area between 2 and 60 m²/g, preferably between 5 and 40 m²/g.

An approach to quantify pozzolanic reactivity of a supplementary cementitious material, including calcined clays, involves a calorimetric analysis according to prEN 17979 "Reactivity of cement constituents - Heat of hydration and bound water content methods". The test method is for assessing the chemical reactivity of a pozzolanic or latent hydraulic cement constituent by measuring its heat of hydration. The cement constituents are specified under EN 197-1 and EN 197-5; and the heat of hydration is measured with isothermal heat conduction calorimeter conforming to EN 196-11.

In preferred embodiments, the calcined clay has a heat of hydration after 7 days of 100 to 1200 J/g, measured according to prEN 17979.

### CARBONATE ROCK POWDER

Although calcined clays can be used as pozzolans, calcination may make the economics of substitution marginal in a conventional pozzolanic blend. It was found that a coupled substitution of cement with calcined clay and carbonate rock powder such as limestone allows much higher levels of substitution. Combination of calcined clay with limestone allows higher levels of substitution down to clinker contents of around 50% with similar mechanical properties and improvement in some aspects of durability. The replacement of clinker with limestone in these blends lowers both the cost and the environmental impact.

In preferred embodiments, the binder component therefore further comprises c) a carbonate rock powder.

### SULFATE SOURCE

Portland cement in its commercially available form, typically contains small amounts of a sulfate source. To prevent undersulfation and to optimize early-age strength, the sulfate content may need to be adjusted in calcined clay blends. An adequate sulfate content can be obtained by adding a sulfate source to the blends. The sulfate source is a compound capable of providing sulfate ions in an alkaline aqueous environment. Generally, the sulfate source has an aqueous solubility of at least 0.6 mmol·L⁻¹ at a temperature of 30°C. The aqueous solubility of the sulfate source is suitably determined in water with a starting pH value of 7.

In general, the extraneous sulfate source may be a calcium sulfate source, preferably selected from calcium sulfate dihydrate, anhydrite, α- and β-hemihydrate, i.e. α-bassanite and β-bassanite, and mixtures thereof. Preferably the calcium sulfate source is α-bassanite and/or β-bassanite.

In still further preferred embodiments, the binder component therefore further comprises d) a sulfate source.

### SUPPLEMENTARY CEMENTITIOUS MATERIAL

The binder component may additionally comprise a supplementary cementitious material other than calcined clay, preferably a supplementary cementitious material selected from slag, fly ash and natural pozzolans. The slag can be either metallurgical slag, which is the solid waste produced by the metallurgical industry, such as steel slag, blast furnace slag (BFS), ground granulated blast furnace slag (GGBFS), red mud (RM), and copper slag (CS), or else synthetic slag. Fly ash is produced inter alia during the combustion of coal in power stations. Class C fly ash (brown-coal fly ash) comprises according to WO 08/012438 about 10% by weight of CaO, whereas class F fly ash (hard-coal fly ash) comprises less than 8% by weight, preferably less than 4% by weight, and typically about 2% by weight of CaO. The natural pozzolans can be tuff, trass or volcanic ash.

Suitably, the binder component comprises, by dry weight based on the total dry weight of the binder component:
a) 15 to 55 wt.-% of a Portland cement clinker containing at least 1.5 wt.-% of C₄AF;
b) 20 to 75 wt.-% of one or more supplementary cementitious materials, one of which being calcined clay, the calcined clay amounting to 20 to 75 wt.-% by dry weight based on the total dry weight of the binder component;
c) 5 to 60 wt.-% of a carbonate rock powder;
d) 1 to 8 wt.-% of a sulfate source, calculated as SO₃.

### C-S-H SEED COMPONENT

As one ingredient, the strength enhancing additive comprises a C-S-H seed component. C-S-H seed components useful in the present invention are known as such. Addition of calcium silicate hydrate (C-S-H) nanoparticles into Ordinary Portland Cements (OPCs) exhibits a seeding effect providing new nucleation sites within the pore space away from the particle surfaces. C-S-H nanoparticles exhibit an accelerating effect without deteriorating final strength development.

Generally, the C-S-H seed component contains calcium and silicon in a molar ratio Ca/Si of 0.1 to 2.2, preferably 0.5 to 1.7.

The C-S-H seed component may additionally include one or more transition metal ions, such as copper, or zinc.

Generally, the construction material composition comprises 0.01 to 6.00 wt.-%, preferably 0.03 to 1.00 wt.-%, of the C-S-H seed component, calculated as sum of CaO and SiO₂, relative to the weight of the binder component.

It is believed that the seeding power of amorphous or semi-ordered calcium silicate hydrates is more pronounced than that of highly ordered or crystalline calcium silicate hydrates. Herein, "semi-ordered" means that the calcium silicate hydrate has a degree of order that lies intermediate between those of a macroscopic crystalline calcium silicate hydrate and amorphous calcium silicate hydrate. Semi-ordered calcium silicate hydrate has physical properties which differ both from the pure crystalline form and from the pure amorphous form.

In order to stabilize the amorphous or semi-ordered state of the calcium silicate hydrate, the C-S-H seed component may comprise a polymeric water-soluble dispersant.

In an embodiment, the C-S-H seed component comprises a finely dispersed mineral constituent stabilized by a polymeric water-soluble dispersant, the mineral constituent comprising an amorphous calcium silicate hydrate

The C-S-H seed component comprises a calcium-silicate-hydrate, which is obtainable in the form of a suspension by reacting a water-soluble calcium compound with a water-soluble silicate compound in the presence of an aqueous solution which contains at least one polymeric dispersant.

Suitably, the water-soluble calcium compound is selected from calcium chloride, calcium nitrate, calcium formate, calcium acetate, calcium bicarbonate, calcium bromide, calcium carbonate, calcium citrate, calcium chlorate, calcium fluoride, calcium gluconate, calcium hydroxide, calcium hypochloride, calcium iodate, calcium iodide, calcium lactate, calcium nitrite, calcium oxalate, calcium phosphate, calcium propionate, calcium silicate, calcium stearate, calcium sulphate, calcium sulphate hemihydrate, calcium sulphate dihydrate, calcium sulphide, calcium tartrate calcium aluminate, tricalcium silicate and/or dicalcium silicate.

The water-soluble calcium compound is preferably selected from calcium chloride and/or calcium nitrate. Advantage of these calcium compounds is their good solubility in water, low price and good availability.

Suitably, the water-soluble silicate compound is selected from sodium silicate, potassium silicate, waterglass, aluminum silicate, tricalcium silicate, dicalcium silicate, calcium silicate, silicic acid, sodium metasilicate and/or potassium metasilicate.

The water-soluble silicate compound is preferably selected from sodium metasilicate, potassium metasilicate and/or waterglass. Advantage of these silicate compounds is their extremely good solubility in water.

Alternatively, the C-S-H seed component comprises a calcium-silicate-hydrate, which is obtainable in the form of a suspension by reacting a calcium compound, preferably a calcium salt, most preferably a water-soluble calcium salt, with a silicon dioxide containing component under alkaline conditions, wherein the reaction is carried out in the presence of an aqueous solution of at least one polymeric dispersant.

The calcium salt can be for example calcium chloride, calcium nitrate, calcium formate, calcium acetate, calcium bicarbonate, calcium bromide, calcium carbonate, calcium citrate, calcium chlorate, calcium fluoride, calcium gluconate, calcium hydroxide, calcium oxide, calcium hypochloride, calcium iodate, calcium iodide, calcium lactate, calcium nitrite, calcium oxalate, calcium phosphate, calcium propionate, calcium silicate, calcium stearate, calcium sulphate, calcium sulphate hemihydrate, calcium sulphate dihydrate, calcium sulphide, calcium tartrate, calcium aluminate, tricalcium silicate and/or dicalcium silicate. Preferable are calcium hydroxide and/or calcium oxide because of their strong alkaline properties. In the case of neutral or acid calcium salts (e.g. calcium chloride or calcium nitrate) it is preferable to use a suitable base to adjust the pH-value to alkaline conditions (e.g. lithium hydroxide, sodium hydroxide, potassium hydroxide, ammonia, magnesium hydroxide or any other earth alkali hydroxide).

Preferable is a pH-value higher than 8, more preferable higher than 9 and most preferable higher than 11. The pH-value is measured preferably at 25 °C and with a solid content of the suspension of 1 weight %.

As the silicon dioxide containing component it is possible to use any material which contains silicon dioxide, for example microsilica, pyrogenic silica, precipitated silica, blast furnace slag, and/or quartz sand. Small particle sizes of the silicon dioxide containing material are preferable, especially particle sizes below 1 µm.

In a preferred embodiment the silicon dioxide containing compound is selected from the group of microsilica, pyrogenic silica, precipitated silica, blast furnace slag and/or quartz sand. Preferable are microsilica, pyrogenic silica and/or precipitated silica, especially precipitated and/or pyrogenic silica.

It is preferable to apply mechanical energy, preferably by milling, to the reaction mixture in order to activate and/or accelerate the reaction of the calcium salt with the usually low water-soluble silicon dioxide containing component. The mechanical energy is also advantageous in order to reach the desired small particle sizes of the calcium silicate hydrates. The wording "milling "means any process in which high shear forces are exerted on the reaction mixture in order to accelerate the reaction and to obtain a suitable particle size. For example milling can be carried out in a planet ball mill in a continuous or batch operation mode. Alternatively an ultradisperser, preferably with a number of revolutions higher than 5.000 r.p.m. can be used. Also it is possible to apply a so-called shaker equipment in which small grinding bodies, preferably smaller than 1 mm in diameter are put together with the reaction mixture into a receptacle and are shaken.

WO 2010/026155 describes a process for the preparation of a hardening accelerator composition by reaction of a water-soluble calcium compound with a water-soluble silicate compound. Said reaction is carried out in the presence of an aqueous solution which contains a water-soluble comb polymer suitable as a plasticizer for hydraulic binders.

In another embodiment, the C-S-H seed component comprises a finely dispersed mineral constituent stabilized by a polymeric water-soluble dispersant, the mineral constituent comprising a semi-ordered calcium silicate hydrate having an apparent crystallite size of 25 nm or less. The semi-ordered calcium silicate hydrate has an apparent crystallite size of 25 nm or less, preferably 15 nm or less, more preferably 5 nm or less, determined by means of X-ray diffraction analysis and subsequent Rietveld analysis. The apparent crystallite size is generally at least 1 nm, e.g. from 1 to 15 nm, or from 1 to 10 nm and particularly preferably from 1 to 5 nm.

The unit cells of the ordered regions of the semi-ordered calcium silicate hydrate, the size of which is described with the aid of their apparent crystallite size in the present patent application, are derived from crystalline calcium silicate hydrate phases (C-S-H). The unit cells of the ordered regions are preferably derived from 9 Å-tobermorite (riversiderite), 10 Å-tobermorite, 11 Å-tobermorite (C/S 0.75 and 0.66), 14 Å-tobermorite (plombierite), scawtite and/or xonotlite, and mixtures thereof. For the present purposes, it has been found to be a sufficient approximation for the determination of the apparent crystallite size to be based exclusively on the unit cell of 14 Å-tobermorite (plombierite).

The C-S-H seed component comprises a product obtainable by wet milling of calcium-silicate-hydrate produced under hydrothermal conditions and where the milling was performed in presence of a water soluble dispersant.

Examples for a composition containing semi-ordered C-S-H and a polymeric dispersant are given in WO 2018/154012 A1.

The mineral constituent can be obtained by reaction of a calcium hydroxide source, e.g. calcium oxide or calcium hydroxide, with a silicon dioxide source, e.g. silicon dioxide, under hydrothermal conditions, i.e., in the presence of water and at an elevated temperature of at least 100 °C and elevated pressure, advantageously in an autoclave. The mineral constituent produced in this way comprises semi-ordered calcium silicate hydrate, crystalline foreign phases including the unreacted crystalline foreign phases or the crystalline foreign phases formed in the reaction, e.g. quartz, portlandite, calcite, etc., and also X-ray-amorphous phases.

The production of the mineral constituent is advantageously carried out in a closed vessel, for example an autoclave, preferably at a temperature in the range from 100 to 400 °C, in particular from 110 to 300 °C or from 110 to 230 °C or from 130 to 200 °C or from 130 to 180 °C or from 155 to 180 °C or from 160 to 180 °C, and a pressure resulting therefrom. As calcium oxide or calcium hydroxide, it is possible to use, for example, quicklime, slacked lime, etc. Examples of suitable types of silicon dioxide are silica sand or quartz flour, microsilica, etc. In order to assist the reaction and shorten the reaction time, the starting materials are generally used with an average particle size of < 1 mm. The silicon dioxide source generally has a particle size d(99) in the range from 1 to 100 µm, in particular from 1 to 90 µm. The amount of calcium oxide or calcium hydroxide and silicon dioxide is generally selected so that the molar ratio of Ca/Si in the mineral constituent is in the range from 0.5 to 2.5, preferably from 0.8 to 2.2, more preferably from 1.0 to 2.0.

It has been found to be advantageous to use a foaming agent, in particular aluminum powder or a paste comprising metallic aluminum, in the hydrothermal production of the mineral constituent.

The mineral constituent is comminuted after the hydrothermal synthesis. Conventional apparatuses such as crushers and ball mills are suitable for this purpose. Comminution is carried out until a particle size (d(97)) of ≤ 5 mm, preferably ≤ 2 mm and in particular a particle size (d(97)) in the range of from 0.05 to 5 mm, preferably 0.1 to 2 mm, in particular 0.3 to 1 mm, is attained. Comminution is carried out at a temperature of ≤ 80 °C, preferably ≤ 60 °C, more preferably ≤ 50 °C.

The polymeric water-soluble dispersant used to stabilize the fine dispersion of the mineral constituent in the C-S-H seed component may be any dispersant, mostly an ionic or non-ionic polymer, also known as fluidity modifier or slump modifier, which is introduced into freshly mixed concrete to improve the workability of the concrete while reducing the amount of water needed for purposes of transportation, pouring and placing the concrete.

For the present purposes, a "water-soluble dispersant" is an organic water-soluble polymeric dispersant, i.e. it is an organic polymer which at 20 °C and atmospheric pressure has a solubility in water of at least 1 g/L, preferably at least 10 g/L, more preferably at least 100 g/L.

In an embodiment, the polymeric water-soluble dispersant is selected from
- polycarboxylate ethers,
- phosphorylated polycondensates being obtainable by a condensation reaction of an aromatic compound having a phosphate moiety, an alkoxylated hydroxyaryl compound having a polyoxyalkylene chain, and formaldehyde,
- non-ionic polymers having a carbon-containing backbone to which are attached pendant hydrolysable groups and polyether side chains, the hydrolysable groups upon hydrolysis releasing ionic anchoring groups,
- sulfonated melamine-formaldehyde condensates,
- lignosulfonates,
- sulfonated ketone-formaldehyde condensates,
- sulfonated naphthalene-formaldehyde condensates,
- phosphonate containing dispersants, and
- mixtures thereof.

In a preferred embodiment, the dispersant is selected from polycarboxylate ethers and phosphorylated polycondensates being obtainable by a condensation reaction of an aromatic compound having a phosphate moiety, an alkoxylated hydroxyaryl compound having a polyoxyalkylene chain, and formaldehyde.

The polycarboxylate ether has a carbon-chain backbone with anionic and/or anionogenic groups and polyoxyalkylene side chains having an average of 3 to 130 oxyalkylene units. The polycarboxylate ethers may be prepared by free radical polymerization of suitable α,β-ethylenically unsaturated monomers.

Anionogenic groups are the acid groups present in the polycarboxylate ether, which can be transformed to the respective anionic group under alkaline conditions.

Preferably, the anionic and anionogenic groups are carboxyl, carboxylate or phosphate groups, hydrogenphosphate or dihydrogenphosphate groups.

### ALKANOLAMINE

As a further ingredient, the strength enhancing additive comprises an alkanolamine. Preferably, the alkanolamine is selected from diethanolamine (DEA), triethanolamine (TEA), diisopropanolamine (DIPA), triisopropanolamine (TIPA), N,N,N',N'-tetrakis(2-hydroxyethyl)ethylenediamine (THEED), methyl diethanolamine (MDEA), and mixtures thereof, preferably triisopropanolamine (TIPA), diethanolamine (DEA) N,N,N',N'-tetrakis(2-hydroxyethyl)ethylenediamine (THEED), methyl diethanolamine (MDEA), and mixtures thereof.

In the strength enhancing additive the weight ratio of the alkanolamine to the C-S-H seed component, calculated as the sum of CaO and SiO₂, is generally from 1:20 to 20:1, preferably from 1:10 to 10:1, most preferably 1:5 to 5:1.

### DISPERSANT

In order to adjust or increase the fluidity of the fresh construction material composition without adding more water to the mix, the construction material composition may comprise a dispersant, especially a dispersant for cementitious mixtures like concrete or mortar, also referred to as "superplasticizer" hereinafter.

Examples of useful dispersants include
- comb polymers having a carbon-containing backbone to which are attached pendant cement-anchoring groups and polyether side chains,
- non-ionic comb polymers having a carbon-containing backbone to which are attached pendant hydrolysable groups and polyether side chains, the hydrolysable groups upon hydrolysis releasing cement-anchoring groups,
- colloidally disperse preparations of polyvalent metal cations, such as Al³⁺, Fe³⁺ or Fe²⁺, and a polymeric dispersant which comprises anionic and/or anionogenic groups and polyether side chains, and the polyvalent metal cation is present in a superstoichiometric quantity, calculated as cation equivalents, based on the sum of the anionic and anionogenic groups of the polymeric dispersant,
- sulfonated melamine-formaldehyde condensates,
- lignosulfonates,
- sulfonated ketone-formaldehyde condensates,
- sulfonated naphthalene-formaldehyde condensates,
- phosphonate containing dispersants,
- phosphate containing dispersants, and
- mixtures thereof.

Preferably, the dispersant is present in a total amount of from 0.10 to 0.75%, dry basis, by weight of binder component. The amount has to be optimized according to the target fluidity of the construction material composition.

Comb polymers having a carbon-containing backbone to which are attached pendant cement-anchoring groups and polyether side chains are particularly preferred. The cement-anchoring groups are anionic and/or anionogenic groups such as carboxylic groups, phosphonic or phosphoric acid groups or their anions. Anionogenic groups are the acid groups present in the polymeric dispersant, which can be transformed to the respective anionic group under alkaline conditions.

Preferably, the structural unit comprising anionic and/or anionogenic groups is one of the general formulae (Ia), (Ib), (Ic) and/or (Id): 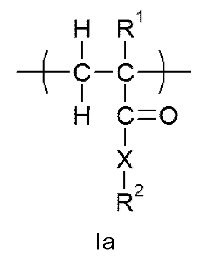 wherein
- R¹: is H, C₁-C₄ alkyl, CH₂COOH or CH₂CO-X-R^{3A}, preferably H or methyl;
- X: is NH-(Cₙ₁H₂ₙ₁) or O-(Cₙ₁H₂ₙ₁) with n1 = 1, 2, 3 or 4, or a chemical bond, the nitrogen atom or the oxygen atom being bonded to the CO group;
- R²: is OM, PO₃M₂, or O-PO₃M₂; with the proviso that X is a chemical bond if R² is OM;
- R^{3A}: is PO₃M₂, or O-PO₃M₂; 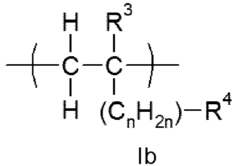
wherein
- R³: is H or C₁-C₄ alkyl, preferably H or methyl;
- n: is 0, 1, 2, 3 or 4;
- R⁴: is PO₃M₂, or O-PO₃M₂; 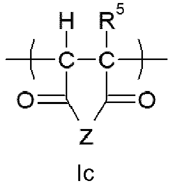
wherein
- R⁵: is H or C₁-C₄ alkyl, preferably H;
- Z: is O or NR⁷;
- R⁷: is H, (Cₙ₁H₂ₙ₁)-OH, (Cₙ₁H₂ₙ₁)-PO₃M₂, (Cₙ₁H₂ₙ₁)-OPO₃M₂, (C₆H₄)-PO₃M₂, or (C₆H₄)-OPO₃M₂, and
- n1: is 1, 2, 3 or 4; 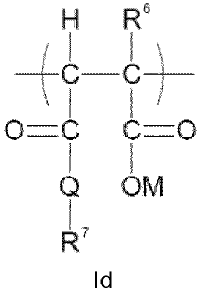
wherein
- R⁶: is H or C₁-C₄ alkyl, preferably H;
- Q: is NR⁷ or O;
- R⁷: is H, (Cₙ₁H₂ₙ₁)-OH, (Cₙ₁H₂ₙ₁)-PO₃M₂, (Cₙ₁H₂ₙ₁)-OPO₃M₂, (C₆H₄)-PO₃M₂, or (C₆H₄)-OPO₃M₂,
- n1: is 1, 2, 3 or 4; and
where each M independently is H or a cation equivalent.

Preferably, the structural unit comprising a polyether side chain is one of the general formulae (IIa), (IIb), (IIc) and/or (Ild): 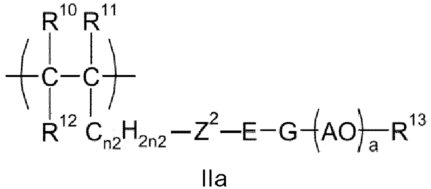 wherein
- R¹⁰, R¹¹ and R¹²: independently of one another are H or C₁-C₄ alkyl, preferably H or methyl;
- Z²: is O or S;
- E: is C₂-C₆ alkylene, cyclohexylene, CH₂-C₆H₁₀, 1,2-phenylene, 1,3-phenylene or 1,4-phenylene;
- G: is O, NH or CO-NH; or
- E and G: together are a chemical bond;
- A: is C₂-C₅ alkylene or CH₂CH(C₆H₅), preferably C₂-C₃ alkylene;
- n2: is 0, 1, 2, 3, 4 or 5;
- a: is an integer from 2 to 350, preferably 10 to 150, more preferably 20 to 100;
- R¹³: is H, an unbranched or branched C₁-C₄ alkyl group, CO-NH₂ or COCH₃; 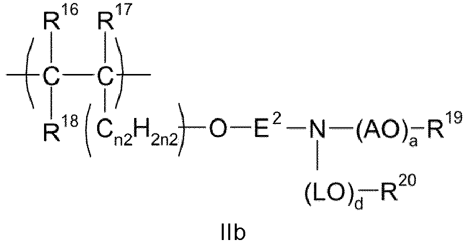
wherein
- R¹⁶, R¹⁷ and R¹⁸: independently of one another are H or C₁-C₄ alkyl, preferably H;
- E²: is C₂-C₆ alkylene, cyclohexylene, CH₂-C₆H₁₀, 1,2-phenylene, 1,3-phenylene, or 1,4-phenylene, or is a chemical bond;
- A: is C₂-C₅ alkylene or CH₂CH(C₆H₅), preferably C₂-C₃ alkylene;
- n2: is 0, 1, 2, 3, 4 or 5;
- L: is C₂-C₅ alkylene or CH₂CH(C₆H₅), preferably C₂-C₃ alkylene;
- a: is an integer from 2 to 350, preferably 10 to 150, more preferably 20 to 100;
- d: is an integer from 1 to 350, preferably 10 to 150, more preferably 20 to 100;
- R¹⁹: is H or C₁-C₄ alkyl; and
- R²⁰: is H or C₁-C₄ alkyl; 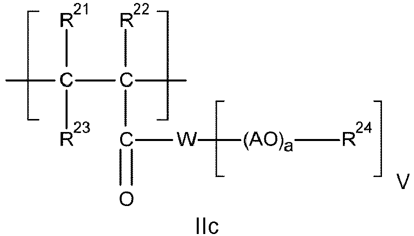
wherein
- R²¹, R²² and R²³: independently are H or C₁-C₄ alkyl, preferably H;
- W: is O, NR²⁵, or is N;
- V: is 1 if W = O or NR²⁵, and is 2 if W = N;
- A: is C₂-C₅ alkylene or CH₂CH(C₆H₅), preferably C₂-C₃ alkylene;
- a: is an integer from 2 to 350, preferably 10 to 150, more preferably 20 to 100;
- R²⁴: is H or C₁-C₄ alkyl;
- R²⁵: is H or C₁-C₄ alkyl; 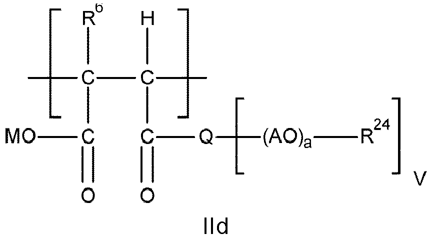
wherein
- R⁶: is H or C₁-C₄ alkyl, preferably H;
- Q: is NR¹⁰, N or O;
- V: is 1 if Q = O or NR¹⁰ and is 2 if Q = N;
- R¹⁰: is H or C₁-C₄ alkyl;
- A: is C₂-C₅ alkylene or CH₂CH(C₆H₅), preferably C₂-C₃ alkylene; and
- a: is an integer from 2 to 350, preferably 10 to 150, more preferably 20 to 100;
where each M independently is H or a cation equivalent.

The molar ratio of structural units (I) to structural units (II) varies from 1:3 to about 10:1, preferably 1:1 to 10:1, more preferably 3:1 to 6:1. The polymeric dispersants comprising structural units (I) and (II) can be prepared by conventional methods, for example by free radical polymerization or controlled radical polymerization. The preparation of the dispersants is, for example, described in EP 0 894 811, EP 1 851 256, EP 2 463 314, and EP 0 753 488.

A number of useful dispersants contain carboxyl groups, salts thereof or hydrolysable groups releasing carboxyl groups upon hydrolysis. Preferably, the milliequivalent number of carboxyl groups contained in these dispersants (or of carboxyl groups releasable upon hydrolysis of hydrolysable groups contained in the dispersant) is lower than 3.0 meq/g, assuming all the carboxyl groups to be in unneutralized form.

More preferably, the dispersant is selected from the group of polycarboxylate ethers (PCEs). In PCEs, the anionic groups are carboxylic groups and/or carboxylate groups. The PCE is preferably obtainable by radical copolymerization of a polyether macromonomer and a monomer comprising anionic and/or anionogenic groups. Preferably, at least 45 mol-%, preferably at least 80 mol-% of all structural units constituting the copolymer are structural units of the polyether macromonomer or the monomer comprising anionic and/or anionogenic groups.

A further class of suitable comb polymers having a carbon-containing backbone to which are attached pendant cement-anchoring groups and polyether side chains comprise structural units (III) and (IV): 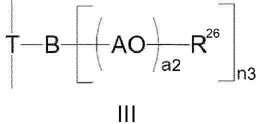 wherein
- T: is phenyl, naphthyl or heteroaryl having 5 to 10 ring atoms, of which 1 or 2 atoms are heteroatoms selected from N, O and S;
- n3: is 1 or 2;
- B: is N, NH or O, with the proviso that n3 is 2 if B is N and n3 is 1 if B is NH or O;
- A: is C₂-C₅ alkylene or CH₂CH(C₆H₅), preferably C₂-C₃ alkylene;
- a2: is an integer from 1 to 300;
- R²⁶: is H, C₁-C₁₀ alkyl, C₅-C₈ cycloalkyl, aryl, or heteroaryl having 5 to 10 ring atoms, of which 1 or 2 atoms are heteroatoms selected from N, O and S;

where the structural unit (IV) is selected from the structural units (IVa) and (IVb): 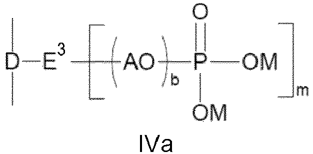
wherein
   - D: is phenyl, naphthyl or heteroaryl having 5 to 10 ring atoms, of which 1 or 2 atoms are heteroatoms selected from N, O and S;
   - E³: is N, NH or O, with the proviso that m is 2 if E³ is N and m is 1 if E³ is NH or O;
   - A: is C₂-C₅ alkylene or CH₂CH(C₆H₅), preferably C₂-C₃ alkylene;
   - b: is an integer from 0 to 300;
   - M: independently is H or a cation equivalent; 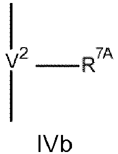
wherein
   - V²: is phenyl or naphthyl and is optionally substituted by 1 or two radicals selected from R⁸, OH, OR⁸, (CO)R⁸, COOM, COOR⁸, SO₃R⁸ and NO₂;
   - R^{7A}: is COOM, OCH₂COOM, SO₃M or OPO₃M₂;
   - M: is H or a cation equivalent; and
   - R⁸: is C₁-C₄ alkyl, phenyl, naphthyl, phenyl-C₁-C₄ alkyl or C₁-C₄ alkylphenyl.

Polymers comprising structural units (III) and (IV) are obtainable by polycondensation of an aromatic or heteroaromatic compound having a polyoxyalkylene group attached to the aromatic or heteroaromatic core, an aromatic compound having a carboxylic, sulfonic or phosphate moiety, and an aldehyde compound such as formaldehyde.

In an embodiment, the dispersant is a non-ionic comb polymer having a carbon-containing backbone to which are attached pendant hydrolysable groups and polyether side chains, the hydrolysable groups upon hydrolysis releasing cement-anchoring groups. Conveniently, the structural unit comprising a polyether side chain is one of the general formulae (IIa), (Ilb), (IIc) and/or (Ild) discussed above. The structural unit having pendant hydrolysable groups is preferably derived from acrylic acid ester monomers, more preferably hydroxyalkyl acrylic monoesters and/or hydroxyalkyl diesters, most preferably hydroxypropyl acrylate and/or hydroxyethyl acrylate. The ester functionality will hydrolyze to (deprotonated) acid groups upon exposure to water at preferably alkaline pH, which is provided by mixing the cementitious binder with water, and the resulting acid functional groups will then form complexes with the cement component.

In one embodiment, the dispersant is selected from colloidally disperse preparations of polyvalent metal cations, such as Al³⁺, Fe³⁺ or Fe²⁺, and a polymeric dispersant which comprises anionic and/or anionogenic groups and polyether side chains. The polyvalent metal cation is present in a superstoichiometric quantity, calculated as cation equivalents, based on the sum of the anionic and anionogenic groups of the polymeric dispersant. Such dispersants are described in further detail in WO 2014/013077 A1, which is incorporated by reference herein.

Suitable sulfonated melamine-formaldehyde condensates are of the kind frequently used as plasticizers for hydraulic binders (also referred to as MFS resins). Sulfonated melamine-formaldehyde condensates and their preparation are described in, for example, CA 2 172 004 A1, DE 44 1 1 797 A1, US 4,430,469, US 6,555,683 and CH 686 186 and also in Ullmann's Encyclopedia of Industrial Chemistry, 5th Ed., vol. A2, page 131, and Concrete Admixtures Handbook - Properties, Science and Technology, 2. Ed., pages 411, 412. Preferred sulfonated melamine-formaldehyde condensates encompass (greatly simplified and idealized) units of the formula 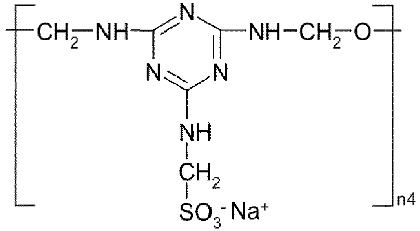 in which n4 stands generally for 10 to 300. The molar weight is situated preferably in the range from 2500 to 80 000. Additionally, to the sulfonated melamine units it is possible for other monomers to be incorporated by condensation. Particularly suitable is urea. Moreover, further aromatic units as well may be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. An example of melaminesulfonate-formaldehyde condensates are the Melment^{®} products distributed by Master Builders Solutions Deutschland GmbH.

Suitable lignosulfonates are products which are obtained as by-products in the paper industry. They are described in Ullmann's Encyclopedia of Industrial Chemistry, 5th Ed., vol. A8, pages 586, 587. They include units of the highly simplified and idealizing formula

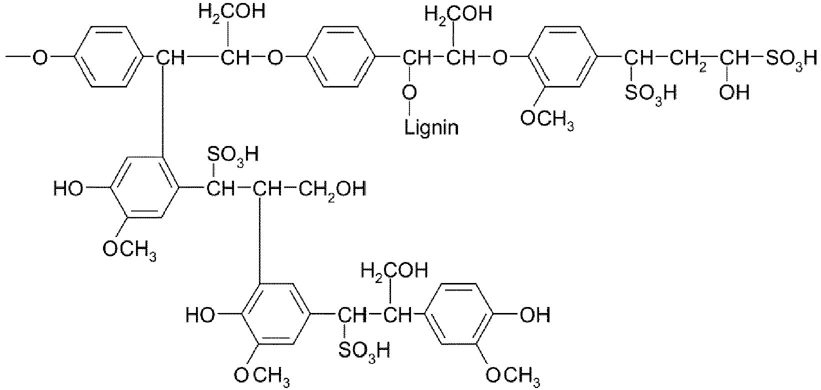

Lignosulfonates have molar weights of between 2000 and 100 000 g/mol. In general, they are present in the form of their sodium, calcium and/or magnesium salts. Examples of suitable lignosulfonates are the Borresperse products distributed by Borregaard LignoTech, Norway.

Suitable sulfonated ketone-formaldehyde condensates are products incorporating a monoketone or diketone as ketone component, preferably acetone, butanone, pentanone, hexanone or cyclohexanone. Condensates of this kind are known and are described in WO 2009/103579, for example. Sulfonated acetone-formaldehyde condensates are preferred. They generally comprise units of the formula (according to J. Plank et al., J. Appl. Poly. Sci. 2009, 2018-2024): 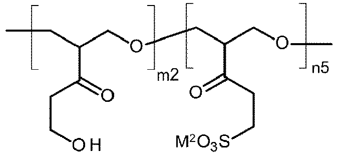 where m2 and n5 are generally each 10 to 250, M² is an alkali metal ion, such as Na⁺, and the ratio m2:n5 is in general in the range from about 3:1 to about 1:3, more particularly about 1.2:1 to 1:1.2. Furthermore, it is also possible for other aromatic units to be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. Examples of suitable sulfonated acetone-formaldehyde condensates are the Melcret K1L products distributed by Master Builders Solutions Deutschland GmbH.

Suitable sulfonated naphthalene-formaldehyde condensates are products obtained by sulfonation of naphthalene and subsequent polycondensation with formaldehyde. They are described in references including Concrete Admixtures Handbook - Properties, Science and Technology, 2. Ed., pages 411 -413 and in Ullmann's Encyclopedia of Industrial Chemistry, 5th Ed., vol. A8, pages 587, 588. They comprise units of the formula

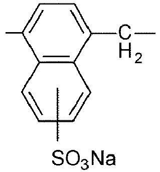

Typically, molar weights (Mw) of between 1000 and 50 000 g/mol are obtained. Furthermore, it is also possible for other aromatic units to be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. Examples of suitable sulfonated β-naphthalene-formaldehyde condensates are the Melcret 500 L products distributed by Master Builders Solutions Deutschland GmbH.

Generally, phosphonate containing dispersants incorporate phosphonate groups and polyether side groups.

Suitable phosphonate containing dispersants are those according to the following formula

R-(OA²)ₙ₆-N-[CH₂-PO(OM³₂)₂]₂

wherein
- R: is H or a hydrocarbon residue, preferably a C₁-C₁₅ alkyl radical,
- A²: is independently C₂-C₁₈ alkylene, preferably ethylene and/or propylene, most preferably ethylene,
- n6: is an integer from 5 to 500, preferably 10 to 200, most preferably 10 to 100, and
- M³: is H, an alkali metal, 1/2 alkaline earth metal and/or an amine.

### EXAMPLES

The invention is further illustrated by the appended drawings and the examples that follow.

Fig. 1 shows the development of early and late strength of various binder components without accelerator, accelerated by C-S-H seed component and accelerated by a combination of C-S-H seed component and alkanolamine (MDEA or TIPA).

Fig. 2 shows the development of early and late strength of an LC³-50 cement accelerated by C-S-H and accelerated by a combination of C-S-H and various alkanolamines.

### Materials and Methods:

C-S-H seed component was prepared from Ca(NO₃)₂ and Na₂SiO₃ in the presence of a dispersant combination according to WO 2010/026155, table 2, Acc. 5.

Mechanical Strength was measured at 1, 7 and 28 days. The mechanical strength was measured on Zwick Roell Allround Line Z150 with a Xforce K 150kN force cell according to DIN 196-1.

Slump was measured without knocks, using a truncated metallic cone (bottom diameter of 100 mm, top diameter of 70 mm and height of 60 mm). The cone was filled completely with the construction composition immediately after mixing. Afterwards, the cone was placed on top of a polished glass surface, and lifted, and the slump of the mortar mix was measured. The slump of all mixes was adjusted to 21 cm by adjusting the dosage of the superplasticizer to allow for comparability.

### Example 1

Three different calcined clays designated as CC1, CC2 and CC3 where used. Kaolinite contents of CC1, CC2 and CC3 were 72, 45 and 27 wt.-%, respectively.

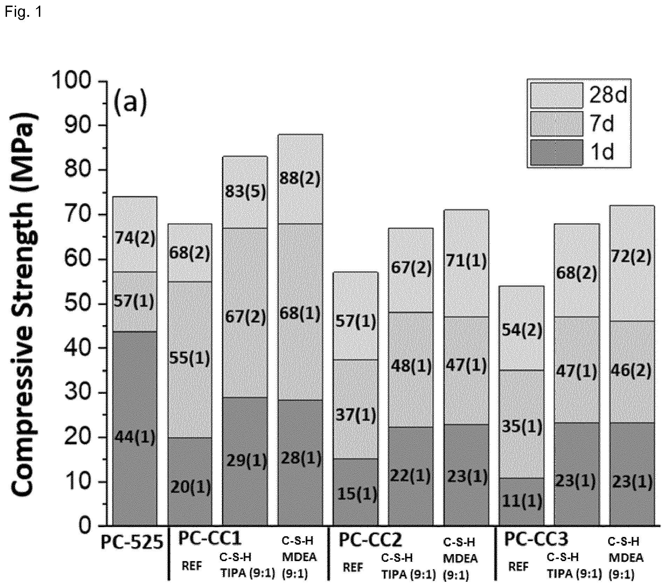

Mix design was: 52 wt.-% Portland cement (52.5R cement, abbreviated as PC-525 in Fig. 1), 30 wt.-% CC#, 15 wt.-% limestone, 3 wt.-% gypsum (these mixes are abbreviated as PC-CC# in Fig. 1). Sand/cement ratio was 1.78. Water to binder ratio was 0.40.

A polycarboxylate based ether (PCE) was used to adjust the flowability, the dosage was 1.2, 1.0 and 0.5% solid per weight of binder, for CC1, CC2 and CC3 respectively.

Three aliquots of each mix were investigated: 1) without strength enhancing additive; 2) with 0.13% of a C-S-H seed component, calculated as sum of CaO and SiO₂, relative to the weight of the binder component, and a methyl diethanolamine (MDEA) solution (with the ratio of MDEA to the sum of CaO and SiO₂ being 1.45); 3) with 0.13% of a C-S-H seed component, calculated as sum of CaO and SiO₂, relative to the weight of the binder component, and a TIPA solution (with the ratio of TIPA to the sum of CaO and SiO₂ being 1.45).

Results of compressive strength measurements are shown in Fig. 1. Fig. 1 shows the improvement in early strength by addition of the C-S-H seed component and improved early and late strength for the C-S-H seed component combined with alkanolamine.

### Example 2

This example was performed in an LC³-50 cement using an LC2 material which is a preblended combination of limestone and calcined clay. This LC² contains an Indian calcined clay which composition is described in the following table 1. The kaolin content of the raw clay was given as 70%.

| | **XRD** | | | | | | | **BET** |
|---|---|---|---|---|---|---|---|---|
| | **Calcite (wt.-%)** | **Quartz (wt.-%)** | **Illite (wt.-%)** | **Mullite (wt.-%)** | **Hematite (wt.-%)** | **Rutile (wt.-%)** | **Amorphous (wt.-%)** | **BET [m²/g]** |
| **Calcined clay India** | 1.6 | 13.2 | 3.7 | 2.8 | 2.2 | 1.8 | 71.2 | 10.676 |

Compressive strength tests were performed in mortar according to the EN196, with the following mix design: 450 g binder (48.5% LC², 48.5% cement and 3% gypsum), 1350 g Normsand. The water to binder ratio was 0.5. A small amount of superplasticizer was used to allow for good casting conditions.

Aliquots were investigated as follows: 1) without strength enhancing additive; 2) with 0.13% C-S-H seed component, calculated as sum of CaO and SiO₂, relative to the weight of the binder component; 3) with 0.13% of a C-S-H seed component, and a TIPA solution (with the ratio of TIPA to the sum of CaO and SiO₂ being 1.45); 4) with 0.13% of a C-S-H seed component and a MDEA solution (with the 1.45 ratio of MDEA to the sum of CaO and SiO₂ being 1.45); 5) with 0.13% of a C-S-H seed component and DEA solution (with the ratio of DEA to the sum of CaO and SiO₂ being 1.45); and 6) with 0.13% of a C-S-H seed component and a THEED solution (with the ratio of THEED to the sum of CaO and SiO₂ being 1.45).

The polycarboxylate (PCE) based superplasticizer dosage is 0.5% solid per weight of binder, for all examples.

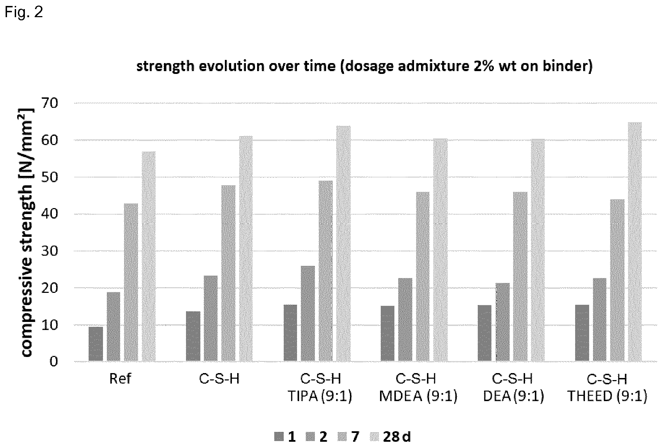

The results are shown in Fig. 2. Fig. 2 shows a significant improvement at 1 day for all combinations of C-S-H seed component and alkanolamine compared to both the reference without strength enhancing additive and with C-S-H seed component only. At 2 days, the compressive strength results show a significant improvement for all C-S-H seed component and alkanolamine combinations compared to the reference, and a significant improvement only for the C-S-H seed component TIPA combination when compared to pure C-S-H seed component. All admixtures also show improved late strength, in particular the combination of C-S-H seed component with either TIPA or THEED.

## Claims

1. A construction material composition comprising a binder component comprising
a) a Portland cement clinker containing at least 1.5 wt.-% of C₄AF; and
b) one or more supplementary cementitious materials, the supplementary cementitious material(s) consisting of or comprising calcined clay;
the construction material composition further comprising a strength enhancing additive comprising
(i) a C-S-H seed component, and
(ii) an alkanolamine.

2. The construction material composition according to claim 1, the binder component further comprising
c) a carbonate rock powder.

3. The construction material composition according to claim 1 or 2, the binder component further comprising
d) a sulfate source.

4. The construction material composition according to any one of the preceding claims, wherein the C-S-H seed component contains calcium and silicon in a molar ratio Ca/Si of 0.1 to 2.2, preferably 0.5 to 1.7.

5. The construction material composition according to any one of the preceding claims, wherein the C-S-H seed component comprises a finely dispersed mineral constituent stabilized by a polymeric water-soluble dispersant, the mineral constituent comprising a semi-ordered calcium silicate hydrate having an apparent crystallite size of 25 nm or less, preferably 15 nm or less.

6. The construction material composition according to any one of the preceding claims, wherein the alkanolamine is selected from diethanolamine (DEA), triethanolamine (TEA), diisopropanolamine (DIPA), triisopropanolamine (TIPA), N,N,N',N'-tetrakis(2-hydroxyethyl)ethylenediamine (THEED), methyl diethanolamine (MDEA), and mixtures thereof.

7. The construction material composition according to any one of the preceding claims, wherein the C-S-H seed component additionally includes one or more transition metal ions, such as copper, zinc.

8. The construction material composition according to any one of the preceding claims, wherein in the strength enhancing additive the weight ratio of the alkanolamine to the C-S-H seed component, calculated as the sum of CaO and SiO₂, is from 1:20 to 20:1, preferably from 1:10 to 10:1, most preferably 1:5 to 5:1.

9. The construction material composition according to any one of the preceding claims, wherein the calcined clay is derived from a raw clay having a kaolinite content of 20 to 80 wt.-%, preferably 30 to 70 wt.-%.

10. The construction material composition according to any one of the preceding claims, wherein the calcined clay has a BET surface area comprised between 2 and 60 m²/g, preferably between 5 and 40 m²/g.

11. The construction material composition according to any one of the preceding claims, wherein the calcined clay has a heat of hydration after 7 days of 100 to 1200 J/g, measured according to prEN17979.

12. The construction material composition according to any one of the preceding claims, further comprising a dispersant.

13. The construction material composition according to any one of claims 3 to 12, the binder component comprising, by dry weight based on the total dry weight of the binder component:
a) 15 to 75 wt.-% of a Portland cement clinker containing at least 1.5 wt.-% of C₄AF;
b) 20 to 75 wt.-% of one or more supplementary cementitious materials, one of which being calcined clay, the calcined clay amounting to 20 to 75 wt.-% by dry weight based on the total dry weight of the binder component;
c) 5 to 60 wt.-% of a carbonate rock powder;
d) 1 to 8 wt.-% of a sulfate source, calculated as SO₃.

14. The construction material composition according to any one of the preceding claims, comprising 0.01 to 6.00 wt.-%, preferably 0.03 to 1.00 wt.-% of the C-S-H seed component, calculated as sum of CaO and SiO₂, relative to the weight of the binder component.

15. A method for enhancing the compressive strength of a binder component comprising
a) a Portland cement clinker containing at least 1.5 wt.-% of C₄AF; and
b) one or more supplementary cementitious materials, the supplementary cementitious material(s) consisting of or comprising calcined clay;
comprising adding to the binder component a strength enhancing additive comprising
(i) a C-S-H seed component, and
(ii) an alkanolamine.
